# EUROPÄISCHE PATENTANMELDUNG

(11) **EP 2 784 919 A2**
(43) Veröffentlichungstag der Anmeldung: **01.10.2014**
(21) Anmeldenummer: 14156336.1
(22) Anmeldetag: 24.02.2014
(51) Int. Cl.: H02K 9/19

(54) **Elektrische Maschine und Verfahren zum Kühlen einer elektrischen Maschine**

(30) Priorität: 27.03.2013 DE 102013205506
(71) Anmelder: Siemens Aktiengesellschaft, 80333 München (DE)
(72) Erfinder: Müller, Harald, 91466 Gerhardshofen (DE); Schröter, Andreas, 91336 Heroldsbach (DE)

(57) **Zusammenfassung**

Die vorliegende Erfindung betrifft eine Elektrische Maschine (10) mit einem Gehäuse (12), einem ersten Kühlmittelkreislauf (20) mit einer ersten Kühlflüssigkeit, wobei der erste Kühlmittelkreislauf (20) im Inneren des Gehäuses (12) angeordnet ist, und zumindest einer Wicklung eines Stators (14) und/oder eines Rotors (16), die im Inneren des Gehäuses (12) angeordnet ist, wobei die zumindest eine Wicklung einen Hohlleiter umfasst, durch dessen Innenraum die erste Kühlflüssigkeit fließt, und einen zweiten Kühlmittelkreislauf (26) mit einer von der ersten verschiedenen zweiten Kühlflüssigkeit, wobei der zweite Kühlmittelkreislauf (26) außerhalb des Gehäuses (12) angeordnet ist.

## Beschreibung

Die vorliegende Erfindung betrifft eine elektrische Maschine. Überdies betrifft die vorliegende Erfindung ein Kleinflugzeug mit einer solchen elektrischen Maschine. Schließlich betrifft die Erfindung ein Verfahren zum Kühlen einer elektrischen Maschine.

Um elektrische Maschinen effektiv kühlen zu können, werden entsprechende Kühlmittelkreisläufe verwendet. In diesem Zusammenhang sind auch elektrische Maschinen bekannt, die Wicklungen mit Hohlleitern umfassen. Durch das Innere der Hohlleiter strömt eine Kühlflüssigkeit, die eine möglichst niedrige Viskosität und eine möglichst hohe Wärmekapazität aufweist. Als Kühlflüssigkeit können entsprechende Thermoöle verwendet werden. Diese Thermoöle sind oft brennbar und können daher ein erhöhtes Sicherheitsrisiko mit sich bringen.

Um dieses Problem zu umgehen, werden nicht brennbare Kühlflüssigkeiten eingesetzt. Derartige Kühlflüssigkeiten weisen üblicherweise eine geringe Wärmekapazität auf, wodurch der Volumenstrom in dem Kühlkreislauf erhöht werden muss. Zudem kann die Viskosität bei diesen Kühlflüssigkeiten deutlich abhängig von der maximal geforderten Einsatztemperatur sein. Des Weiteren weisen diese Kühlflüssigkeiten im Vergleich zu typischerweise verwendeten Thermoölen eine höhere Viskosität auf, wodurch sich der Druckabfall in dem Hohlleiter deutlich vergrößert. Durch die zusätzlich notwendige Erhöhung des Volumenstroms wird ebenso ein höherer Druckverlust erzeugt. Die dafür nötige mechanische Leistung einer Kühlmittelpumpe reduziert den Gesamtwirkungsgrad der elektrischen Maschine deutlich.

Es ist Aufgabe der vorliegenden Erfindung, eine elektrische Maschine bereitzustellen, die effektiver und sicherer betrieben werden kann. Zudem soll ein entsprechendes Verfahren zum Kühlen einer elektrischen Maschine bereitgestellt werden.

Diese Aufgabe wird durch eine elektrische Maschine gemäß Patentanspruch 1, ein Kleinflugzeug gemäß Patentanspruch 9 und ein Verfahren gemäß Patentanspruch 10 gelöst. Vorteilhafte Weiterbildungen der vorliegenden Erfindung sind Gegenstand der abhängigen Ansprüche.

Die erfindungsgemäße elektrische Maschine umfasst ein Gehäuse, einen ersten Kühlmittelkreislauf mit einer ersten Kühlflüssigkeit, wobei der erste Kühlmittelkreislauf im Inneren des Gehäuses angeordnet ist, zumindest eine Wicklung eines Stators und/oder eines Rotors, die im Inneren des Gehäuses angeordnet ist, wobei die zumindest eine Wicklung einen Hohlleiter umfasst, durch dessen Innenraum die erste Kühlflüssigkeit strömt, und einen zweiten Kühlmittelkreislauf mit einer von der ersten verschiedenen zweiten Kühlflüssigkeit, wobei der zweite Kühlmittelkreislauf außerhalb des Gehäuses angeordnet ist.

Die elektrische Maschine umfasst ein Gehäuse. In dem Gehäuse sind der Stator und der Rotor der elektrischen Maschine angeordnet, wobei der Rotor mit einer Welle drehfest verbunden ist. Der Stator und/oder der Rotor können entsprechenden Wicklungen umfassen, die durch Hohleiter gebildet sind. Durch das Innere der Hohlleiter kann eine erste Kühlflüssigkeit eines ersten Kühlkreislaufs befördert werden. Die erste Kühlflüssigkeit muss elektrisch isolierend ausgebildet sein. Durch den ersten Kühlmittelkreis kann die Wärme, die bei der Bestromung der Wicklungen entsteht, direkt abgeführt werden. Der erste Kühlkreislauf kann komplett in dem Gehäuse angeordnet sein. Zudem weist die elektrische Maschine einen zum ersten Kühlkreislauf getrennten, zweiten Kühlkreislauf auf. Der zweite Kühlkreislauf ist außerhalb des Gehäuses angeordnet und umfasst eine zu der ersten Kühlflüssigkeit verschiedene zweite Kühlflüssigkeit. Somit kann ein zweiteiliges Kühlsystem für eine elektrische Maschine bereitgestellt werden, mit der die Betriebstemperatur der elektrischen Maschine reduziert werden kann. Damit können insbesondere die Anforderungen an die elektrischen Isolationselemente in der elektrischen Maschine reduziert werden.

Bevorzugt weist die erste Kühlflüssigkeit im Vergleich zu der zweiten Kühlflüssigkeit eine höhere Wärmekapazität auf. Somit kann die Wärme von dem Stator und/oder dem Rotor der elektrischen Maschine besonders effektiv abgeführt werden.

In einer Ausführungsform weist die erste Kühlflüssigkeit im Vergleich zu der zweiten Kühlflüssigkeit eine geringere Viskosität auf. Dabei kann die Viskosität der ersten Kühlflüssigkeit so gewählt werden, dass die Wärme von dem Stator und/oder dem Rotor effektiv abgeführt werden kann und zudem die mechanische Pumpenleistung einer Kühlmittelpumpe des ersten Kühlmittelkreises einen vorgegebenen Grenzwert nicht überschreitet. Somit kann die elektrische Maschine besonders effektiv gekühlt werden.

In einer weiteren Ausgestaltung ist das Gehäuse hermetisch dicht ausgebildet. Zur hermetischen Abdichtung des Gehäuses können entsprechende Dichtungen verwendet werden. Die hermetische Abdichtung ermöglicht die Verwendung einer brennbaren ersten Kühlflüssigkeit. Durch das hermetisch abgeschlossene Gehäuse, in dem der erste Kühlkreislauf mit dem zumindest einen Hohleiter angeordnet ist, kann eine geforderte Schutzart bereitgestellt werden. Zudem kann die Brandsicherheit durch den begrenzten Sauerstoffvorrat in dem Gehäuse reduziert werden. Damit kann die Sicherheit beim Betrieb der elektrischen Maschine erhöht werden.

Bevorzugt umfasst der erste Kühlmittelkreislauf eine Kühlmittelpumpe, die mit einer Welle der elektrischen Maschine drehfest verbunden ist. Die Kühlmittelpumpe des ersten Kühlkreislaufs kann durch die Welle der elektrischen Maschine angetrieben werden. Damit kann ein bauraumsparender Antrieb für die Kühlmittelpumpe bereitgestellt werden.

In einer weiteren Ausführungsform umfasst der erste Kühlmittelkreislauf eine Kühlmittelpumpe, die einen von dem Stator und Rotor unabhängigen Antrieb aufweist. Dadurch, dass die Kühlmittelpumpe mit einem separaten Antrieb angetrieben wird, kann der Volumenstrom unabhängig von der Drehzahl der Welle bzw. des Rotors angepasst werden. Insbesondere bei einer Anwendung, bei dem mit der elektrischen Maschine ein hohes Drehmoment bei einer niedrigen Drehzahl bereitgestellt werden soll, ergebenen sich durch den separaten Antrieb der Kühlmittelpumpe Vorteile. Eine solche Anwendung kann sich beispielsweise ergeben, wenn die elektrische Maschine in einer Radnabe angeordnet ist und mit dem Rad ein Hindernis überfahren wird.

Bevorzugt umfasst die elektrische Maschine eine Wärmetauschereinrichtung, die mit dem ersten und dem zweiten Kühlmittelkreislauf thermisch gekoppelt ist. Durch die Wärmetauschereinrichtung kann die Wärme von dem ersten Kühlkreislauf an den zweiten Kühlkreislauf übertragen werden. Damit kann die Wärme aus dem Inneren des Gehäuses effektiv nach außen abgeführt werden.

In einer Ausgestaltung umfasst die erste Kühlflüssigkeit ein Thermoöl und die zweite Kühlflüssigkeit Wasser. Mit einem Thermoöl kann die Wärme effektiv von dem Stator und/oder dem Rotor im Inneren des Gehäuses abgeführt werden. Außerhalb des Gehäuses ist die elektrische Maschine wie eine wassergekühlte elektrische Maschine ausgebildet. Als zweite Kühlflüssigkeit kann auch Wasser und Glykol umfassen. Bei der Verwendung einer brennbaren Flüssigkeit als erste Kühlflüssigkeit wird die Menge der brennbaren Flüssigkeit auf ein Minimum reduziert. Somit kann die Sicherheit beim Betrieb der elektrischen Maschine erhöht werden.

Das erfindungsgemäße Kleinflugzeug umfasst zumindest eine erfindungsgemäße elektrische Maschine. Das Kleinflugzeug, das auch als Leichtflugzeug bezeichnet werden kann, kann einen oder zwei elektrische Maschinen umfassen, die zum Antrieb des Kleinflugzeugs dienen. Durch die verringerte Brandgefahr der elektrischen Maschine kann die Sicherheit beim Betrieb des Flugzeugs erhöht werden. Zudem weist die elektrische Maschine ein geringes Gewicht auf, wodurch das Kleinflugzeug kostengünstig und umweltschonend betrieben werden kann.

Das erfindungsgemäße Verfahren zum Kühlen einer elektrischen Maschine, wobei die elektrische Maschine ein Gehäuse und zumindest eine Wicklung eines Stators und/oder Rotors umfasst, die im Inneren des Gehäuses angeordnet ist und wobei die zumindest eine Wicklung einen Hohlleiter umfasst, umfasst das Bereitstellen eines ersten Kühlmittelkreislaufs mit einer ersten Kühlflüssigkeit, wobei der erste Kühlmittelkreislauf im Inneren eines Gehäuses der elektrischen Maschine angeordnet ist und die durch den Innenraum des Hohlleiters fließt, und das Bereitstellen eines zweiten Kühlmittelkreislaufs mit einer von der ersten verschiedenen zweiten Kühlflüssigkeit, wobei der zweite Kühlmittelkreislauf außerhalb des Gehäuses angeordnet ist.

Die zuvor im Zusammenhang mit der erfindungsgemäßen elektrischen Maschine beschriebenen Weiterbildungen können auf das erfindungsgemäße Kleinflugzeug und das erfindungsgemäße Verfahren übertragen werden.

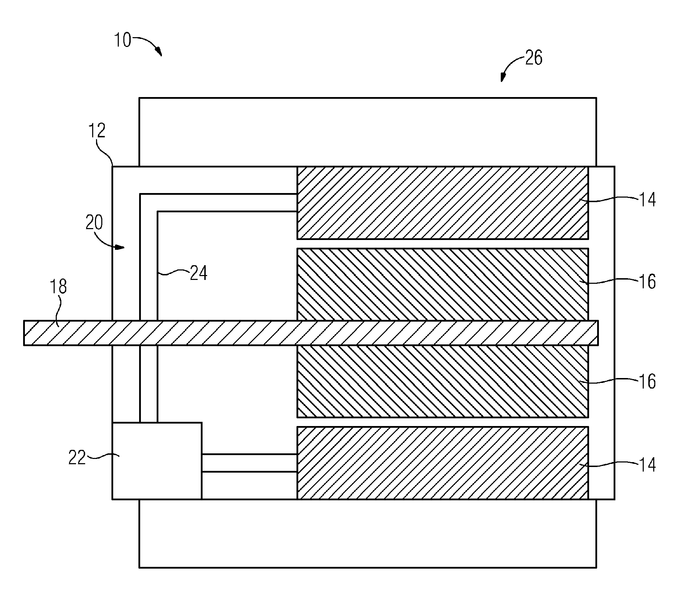

Die vorliegende Erfindung wird nun anhand der beigefügten Zeichnung näher erläutert. Dabei zeigt die einzige Figur eine schematische Darstellung einer elektrischen Maschine in einer geschnittenen Seitenansicht.

Das nachfolgend näher geschilderte Ausführungsbeispiel stellt eine bevorzugte Ausführungsform der vorliegenden Erfindung dar.

Die Figur zeigt eine schematische Darstellung einer elektrischen Maschine 10 in einer geschnittenen Seitenansicht. Die elektrische Maschine 10 umfasst ein Gehäuse 12. Dieses Gehäuse 12 kann beispielsweise aus Metall gefertigt sein. Das Gehäuse 12 ist hermetisch dicht - also undurchlässig für Flüssigkeiten und Gase - ausgebildet. Zur Abdichtung kann das Gehäuse 12 hier nicht dargestellte Dichtungen aufweisen. Die elektrische Maschine wird mit einer elektrischen Energiequelle mit Energie versorgt.

Des Weiteren umfasst die elektrische Maschine 10 einen Stator 14 und einen Rotor 16, der drehfest mit einer Welle 18 verbunden ist. Vorliegend nicht näher dargestellte Wicklungen des Stators 14 und/oder des Rotors 16 sind durch Hohlleiter gebildet. Mit anderen Worten sind die Wicklungen des Stators 14 und/oder des Rotors 16 durch hohlzylinderförmige elektrische Leiter gebildet. Durch die Hohlleiter fließt eine erste, elektrisch isolierende Kühlflüssigkeit eines ersten Kühlmittelkreislaufs 20. Die erste Kühlflüssigkeit in dem ersten Kühlmittelkreislauf 20 wird mittels einer Kühlmittelpumpe 22 gefördert. Die Kühlmittelpumpe 22 ist in dem Innenraum des Gehäuses 12 angeordnet und weist einen separaten Antrieb auf, mit dem der Volumenstrom der ersten Kühlflüssigkeit in dem ersten Kühlmittelkreislauf 20 eingestellt werden kann. Im vorliegenden Ausführungsbeispiel ist die Kühlmittelpumpe 22 mit Zuleitungen 24 mit den Hohlleitern des Stators 14 verbunden.

Des Weiteren umfasst die elektrische Maschine 10 einen zweiten Kühlmittelkreislauf 26, der außerhalb des Gehäuses 12 angeordnet ist. Der erste Kühlmittelkreislauf 20 ist mit dem zweiten Kühlmittelkreislauf 26 über eine hier nicht dargestellte Wärmetauschereinrichtung thermisch gekoppelt. Damit kann die Wärme aus dem Inneren des Gehäuses 12 besonders effektiv nach außen abgeführt werden. Der zweite Kühlmittelkreislauf 26 kann auch mehrere Kühlmittelkanäle umfassen, die an einer Außenwand des Gehäuses angeordnet sind.

Als erstes Kühlmittel in dem ersten Kühlmittelkreislauf 20 wird bevorzugt ein Thermoöl verwendet. Beispielsweise kann das Thermoöl Therminol^{®} D12 der Firma Fragol verwendet werden. Dieses Thermoöl weist eine hohe Wärmekapazität auf und ist gleichzeitig niedrig viskos genung. Damit kann die Wärme in den Wicklungen des Stators 14 und/oder des Rotors 16 effektiv abgeführt werden. Durch das hermetisch dichte Gehäuse 12 kann die benötigte Sicherheit auch gewährleistet werden, wenn ein brennbares Thermoöl als erste Kühlflüssigkeit verwendet wird. In dem zweiten Kühlmittelkreislauf 26 wird bevorzugt Wasser, Glykol oder ein Gemisch aus Wasser und Glykol verwendet.

Die elektrische Maschine 10 kann beispielsweise in einen Elektrofahrzeug zum Antreiben von Antriebsrädern des Elektrofahrzeugs verwendet werden. Bevorzugt wird zumindest eine elektrische Maschine 10 in einem Kleinflugzeug oder Leichtflugzeug zum jeweiligen Antreiben eines Propellers des Flugzeugs verwendet. Das vorliegende Konzept verbessert die Sicherheit einer mit einer Hohlleiterkühlung ausgerüsteten elektrischen Maschine 10, da bei der Verwendung eines brennbaren Mediums als erste Kühlflüssigkeit ein abgeschlossenes Gehäuse vorliegt und die Verwendung des brennbaren Kühlmediums auf ein Minimum beschränkt ist. Zudem kann die Akzeptanz erhöht werden, da die elektrische Maschine 10 extern wie eine normale flüssigkeitsgekühlte elektrische Maschine 10 betrachtet werden kann.

## Patentansprüche

1. Elektrische Maschine (10) mit
- einem Gehäuse (12),
- einem ersten Kühlmittelkreislauf (20) mit einer ersten Kühlflüssigkeit, wobei der erste Kühlmittelkreislauf (20) im Inneren des Gehäuses (12) angeordnet ist, und
- zumindest einer Wicklung eines Stators (14) und/oder eines Rotors (16), die im Inneren des Gehäuses (12) angeordnet ist, wobei
- die zumindest eine Wicklung einen Hohlleiter umfasst, durch dessen Innenraum die erste Kühlflüssigkeit fließt, **gekennzeichnet durch**
- einen zweiten Kühlmittelkreislauf (26) mit einer von der ersten verschiedenen zweiten Kühlflüssigkeit, wobei
- der zweite Kühlmittelkreislauf (26) außerhalb des Gehäuses (12) angeordnet ist.

2. Elektrische Maschine (10) nach Anspruch 1, **dadurch gekennzeichnet, dass** die erste Kühlflüssigkeit im Vergleich zu der zweiten Kühlflüssigkeit eine höhere Wärmekapazität aufweist.

3. Elektrische Maschine (10) nach Anspruch 1 oder 2, **dadurch gekennzeichnet, dass** die erste Kühlflüssigkeit im Vergleich zu der zweiten Kühlflüssigkeit eine geringere Viskosität aufweist.

4. Elektrische Maschine (10) nach einem der vorhergehenden Ansprüche, **dadurch gekennzeichnet, dass** das Gehäuse (12) hermetisch dicht ausgebildet ist.

5. Elektrische Maschine (10) nach einem der vorhergehenden Ansprüche, **dadurch gekennzeichnet, dass** der erste Kühlmittelkreislauf (20) eine Kühlmittelpumpe (22) umfasst, die mit einer Welle (18) der elektrischen Maschine (10) drehfest verbunden ist.

6. Elektrische Maschine (10) nach einem der Ansprüche 1 bis 4, **dadurch gekennzeichnet, dass** der erste Kühlmittelkreislauf (20) eine Kühlmittelpumpe (22) umfasst, die einen von dem Stator (14) und Rotor (16) unabhängigen Antrieb aufweist.

7. Elektrische Maschine (10) nach einem der vorhergehenden Ansprüche, **dadurch gekennzeichnet, dass** die elektrische Maschine (10) eine Wärmetauschereinrichtung umfasst, die mit dem ersten und dem zweiten Kühlmittelkreislauf (20, 26) thermisch gekoppelt ist.

8. Elektrische Maschine (10) nach einem der vorhergehenden Ansprüche, **dadurch gekennzeichnet, dass** die erste Kühlflüssigkeit ein Thermoöl und die zweite Kühlflüssigkeit Wasser umfasst.

9. Kleinflugzeug mit zumindest einer elektrischen Maschine (10) nach einem der vorhergehenden Ansprüche.

10. Verfahren zum Kühlen einer elektrischen Maschine (10), wobei die elektrische Maschine (10) ein Gehäuse (12) und zumindest eine Wicklung eines Stators (14) und/oder Rotors (16) umfasst, die im Inneren des Gehäuses (12) angeordnet ist und wobei die zumindest eine Wicklung einen Hohlleiter umfasst durch
- Bereitstellen eines ersten Kühlmittelkreislaufs (20) mit einer ersten Kühlflüssigkeit, wobei der erste Kühlmittelkreislauf (20) im Inneren eines Gehäuses (12) der elektrischen Maschine (12) angeordnet ist und die durch den Innenraum des Hohlleiters fließt,
**gekennzeichnet durch**
- Bereitstellen eines zweiten Kühlmittelkreislaufs (26) mit einer von der ersten verschiedenen zweiten Kühlflüssigkeit, wobei der zweite Kühlmittelkreislauf (26) außerhalb des Gehäuses (12) angeordnet ist.
